# EUROPÄISCHE PATENTSCHRIFT

(11) **EP 4 696 586 B1**
(45) Veröffentlichungstag und Bekanntmachung des Hinweises auf die Patenterteilung: **30.09.2026**
(21) Anmeldenummer: 25194958.2
(22) Anmeldetag: 08.08.2025
(51) Int. Cl.: B62D 1/181

(54) **LENKSÄULE UND VERFAHREN ZUM ERKENNEN EINER EINKLEMMSITUATION BEIM VERSTELLEN EINER LENKSÄULE IN EINEM KRAFTFAHRZEUG**
STEERING COLUMN AND METHOD FOR DETECTING A JAMMING SITUATION WHEN ADJUSTING A STEERING COLUMN IN A MOTOR VEHICLE
COLONNE DE DIRECTION ET PROCÉDÉ DE DÉTECTION D'UNE SITUATION DE COINCEMENT LORS DU RÉGLAGE D'UNE COLONNE DE DIRECTION DANS UN VÉHICULE AUTOMOBILE

(30) Priorität: 16.08.2024 BE 202405532
(43) Veröffentlichungstag der Anmeldung: 18.02.2026
(73) Patentinhaber: thyssenkrupp Presta Aktiengesellschaft, 9492 Eschen (LI); thyssenkrupp AG, 45143 Essen (DE)
(72) Erfinder: Major, Gabor, 9475 Sevelen (CH); Riedmann, Patrick, 6850 Dornbirn (AT)
(74) Vertreter: thyssenkrupp Intellectual Property GmbH

(56) Entgegenhaltungen:
- DE-A1- 102019 108 466
- DE-A1- 102022 125 280

## Beschreibung

Die Erfindung betrifft ein Verfahren zum Erkennen einer Einklemmsituation beim elektromechanischen Verstellen einer Lenksäule in einem Kraftfahrzeug mittels wenigstens eines Elektromotors, wobei während eines Verstellvorgangs für den wenigstens einen Elektromotor ein Stromsignal erfasst und eine Steigung des Stromsignals ausgewertet wird.

Des Weiteren betrifft die Erfindung eine verstellbare Lenksäule für ein Kraftfahrzeug umfassend eine Trageinheit, von welcher eine Stelleinheit verstellbar gehalten ist, und eine Verstelleinrichtung, die zum Verstellen der Stelleinheit gegenüber der Trageinheit ausgebildet ist, wobei die Verstelleinrichtung zum Verstellen der Stelleinheit wenigstens einen Elektromotor umfasst und der Lenksäule eine Steuereinheit zugeordnet ist.

Im Stand der Technik ist aus der US 2018/0079441 A1 eine Lenksäule bekannt, die zwischen einer Verstauposition und einer Betriebsposition verstellbar ist. Weiter ist aus der DE 10 2019 108 466 A1 eine verstellbare Lenksäule mit einer Stelleinheit und einer Trageinheit für ein Kraftfahrzeug bekannt, wobei die Lenksäule in eine Verstauposition verbracht werden kann. Mittels einer Positionserkennungsvorrichtung wird die Position einer Stelleinheit relativ zur Trageinheit ermittelt, wobei das Verstellen der Stelleinheit unter Berücksichtigung der ermittelten Position erfolgt.

Für eine Lenkradanordnung mit einem elektrisch verstellbaren Lenkrad ist darüber hinaus aus der EP 3 042 825 A1 bekannt, einen Kontakt oder einen Widerstand beim Zurückführen des Lenkrads zu erkennen und das Lenkrad bei einer solchen Erkennung in eine Bedienposition zurückzuführen. Zudem wird in der DE 10 2022 125 280 A1 ein Verfahren zur Erkennung des Einklemmens einer Lenksäule eines Fahrzeugs beschrieben, wobei für einen Elektromotor der Lenksäule eine Stromänderungsgeschwindigkeit und eine Drehzahländerungsgeschwindigkeit erfasst und durch einen Schwellwertvergleich ausgewertet werden.

Vor diesem Hintergrund ist es eine Aufgabe der vorliegenden Erfindung, eine Einklemmsituation beim Verstellen einer verstellbaren Lenksäule in einem Kraftfahrzeug verbessert zu erkennen, und insbesondere die Anzahl von fehlerhaft erkannten Einklemmsituationen zu verringern.

Zur Lösung dieser Aufgabe werden ein Verfahren zum Erkennen einer Einklemmsituation beim elektromechanischen Verstellen einer Lenksäule in einem Kraftfahrzeug gemäß Anspruch 1 sowie eine verstellbare Lenksäule für ein Kraftfahrzeug gemäß dem nebengeordneten Anspruch vorgeschlagen. Weitere vorteilhafte Ausgestaltungen der Erfindung sind in den abhängigen Ansprüchen und der Beschreibung beschrieben sowie in den Figuren dargestellt.

Die vorgeschlagene Lösung sieht ein Verfahren zum Erkennen einer Einklemmsituation beim elektromechanischen Verstellen einer Lenksäule in einem Kraftfahrzeug mittels wenigstens eines Elektromotors, insbesondere beim Verstellen einer Lenksäule zwischen einer Verstauposition und einer Bedienposition, vor, wobei während eines Verstellvorgangs für den wenigstens einen Elektromotor ein Stromsignal erfasst und eine Steigung des Stromsignals ausgewertet wird. Bei der Auswertung der Steigung des Stromsignals wird dabei geprüft, ob die Steigung des Stromsignals innerhalb vorgegebener Grenzen liegt, wobei dann auf eine Einklemmsituation erkannt wird, wenn die Steigung des Stromsignals innerhalb der vorgegebenen Grenzen liegt. Es wird dabei vorteilhafterweise insbesondere geprüft, ob die Steigung des erfassten Stromsignals eine untere Grenze überschritten hat, aber die Steigung des erfassten Stromsignals unterhalb einer oberen Grenze liegt. Es hat sich gezeigt, dass durch die Prüfung, ob die Steigung des Stromsignals innerhalb der vorgegebenen Grenzen liegt, ein fehlerhaftes Erkennen von Einklemmsituationen verhindert werden kann, da Stromschwankungen, die insbesondere auf mechanische Einflüsse bei einem Verstellen der Lenksäule zurückzuführen sind, verbessert als mögliche Auslöser für ein Erkennen einer Einklemmsituation ausgeschlossen werden können. So kann beispielsweise das Verstellen der Lenksäule in einen als Hartstopp ausgebildeten Begrenzer zu einer starken Steigung des Stromsignals führen, wobei die obere Grenze der vorgegebenen Grenzen dann vorteilhafterweise so festgelegt ist, dass in dem Fall die erfasste Steigung die obere Grenze überschreitet und insofern nicht auf eine Einklemmsituation erkannt wird. Eine Einklemmsituation liegt insbesondere dann vor, wenn ein Verstellen der Lenksäule gegen einen durch ein Hindernis hervorgerufenen Widerstand erfolgt, also insbesondere wenn ein Kontakt mit einem Körperteil eines Fahrers beim Verstellen erfolgt.

Gemäß einer vorteilhaften Ausgestaltung des Verfahrens werden die Grenzen durch einen ersten Steigungsverlauf, der eine obere Grenze bildet, und einen zweiten Steigungsverlauf, der eine untere Grenze bildet, vorgegeben. Eine Einklemmsituation wird dann vorteilhafterweise erkannt, wenn die Steigung des erfassten Stromsignals zwischen dem ersten Steigungsverlauf und dem zweiten Steigungsverlauf liegt. Wird der erste Steigungsverlauf überschritten oder zumindest dauerhaft überschritten, wird also insbesondere nicht auf eine Einklemmsituation erkannt.

Entsprechend wird insbesondere dann nicht auf eine Einklemmsituation erkannt, wenn die Steigung des erfassten Stromsignals unterhalb des zweiten Steigungsverlaufs liegt. Durch einen Steigungsverlauf als obere und untere Grenze kann vorteilhafterweise die Zahl von fälschlich erkannten Einklemmsituationen vorteilhafterweise weiter reduziert werden.

Vorteilhafterweise ist der erste Steigungsverlauf ein Abschnitt einer ersten Steigungskurve, insbesondere einer ersten Steigungsgeraden, und der zweite Steigungsverlauf ein Abschnitt einer zweiten Steigungskurve, insbesondere einer zweiten Steigungsgeraden. Vorteilhafterweise lässt sich ein Steigungsverlauf so vergleichsweise einfach festlegen. Darüber hinaus kann der Steigungsverlauf verbessert so angepasst werden, dass Einklemmsituationen und Nicht-Einklemmsituationen besser voneinander unterschieden werden können. Insbesondere ist die Steigung des ersten Steigungsverlaufs größer, als die Steigung des zweiten Steigungsverlaufs.

Gemäß einem weiteren vorteilhaften Aspekt der Erfindung werden die Grenzen im Voraus ermittelt. Vorteilhafterweise trifft die Lenksäule dabei, insbesondere durch eine entsprechende Ansteuerung des wenigstens einen Elektromotors, in einer Mehrzahl von Verstellvorgängen beim Verstellen jeweils auf ein Hindernis auf. Das Hindernis simuliert dabei insbesondere ein mögliches tatsächliches Hindernis, insbesondere ein menschliches Körperteil. Ein sich beim Auftreffen auf das jeweilige Hindernis ergebendes Stromsignal des wenigstens einen Elektromotors wird dann vorteilhafterweise erfasst und in Bezug auf dessen Steigung ausgewertet. Die Grenzen für die Erkennung einer Einklemmsituation werden dann vorteilhafterweise derart vorgegeben, dass die Steigung der beim Verstellen im Kraftfahrzeug erfassten Stromsignale innerhalb der Grenzen liegen. Vorteilhafterweise können die Grenzen so mit hoher Präzision festgelegt werden. Einklemmsituationen lassen sich so mit hoher Zuverlässigkeit erkennen. Fehler, insbesondere durch ein Erkennen einer Einklemmsituation, obwohl keine Einklemmsituation vorliegt, lassen sich weiter verbessert vermeiden.

Zudem wird vorteilhafterweise ein Verfahren zum Einstellen der Grenzen für ein erfindungsgemäß ausgebildetes Verfahren zum Erkennen einer Einklemmsituation beim elektromechanischen Verstellen einer Lenksäule in einem Kraftfahrzeug mittels wenigstens eines Elektromotors bereitgestellt, wobei in einer Mehrzahl von Verstellvorgängen die Lenksäule beim Verstellen jeweils auf ein Hindernis auftrifft, wobei das Hindernis ein mögliches tatsächliches Hindernis simuliert, und wobei ein sich beim Auftreffen auf das jeweilige Hindernis ergebendes Stromsignal des wenigstens einen Elektromotors der Verstelleinrichtung der Lenksäule erfasst und in Bezug auf dessen Steigung ausgewertet wird, und die Grenzen derart vorgegeben werden, dass die Steigung der erfassten Stromsignale innerhalb der Grenzen liegen. Insbesondere wird ein sich beim Auftreffen auf ein erstes Hindernis, das im Vergleich zu den weiteren Hindernissen am wenigsten hart ist, aus den bestimmten Steigungen ergebender Steigungsverlauf dann vorteilhafterweise als die untere Grenze definiert, wobei die untere Grenze durch Beaufschlagung mit einem Offset insbesondere weiter abgesenkt werden kann. Ein sich beim Auftreffen auf ein zweites Hindernis, das im Vergleich zu den weiteren Hindernissen am härtesten ist, aus den dabei bestimmten Steigungen ergebender weiterer Steigungsverlauf definiert dann vorteilhafterweise die obere Grenze, wobei die obere Grenze durch Beaufschlagung mit einem Offset insbesondere weiter angehoben werden kann. Durch Versuche mit weiteren Hindernissen, die bezüglich ihrer Härte zwischen dem ersten Hindernis und dem zweiten Hindernis liegen, wird vorteilhafterweise geprüft, ob diese innerhalb der unteren und oberen Grenze liegen, wobei bei Bedarf die Steigungsverläufe, die die untere Grenze und die obere Grenze bilden, vorteilhafterweise weiter so angepasst werden, dass die Steigungen, die sich für sämtliche der weiteren Hindernisse ergeben, innerhalb der unteren und oberen Grenze liegen.

Weiter vorteilhaft werden die Hindernisse jeweils durch eine Anordnung umfassend ein fest angeordnetes Federelement und ein der Lenksäule zugewandtes Elastomerelement simuliert. Unterschiedliche Hindernisse werden dabei vorteilhafterweise durch unterschiedliche Federkonstanten der Federelemente und/oder unterschiedliche Shorehärten der Elastomerelemente simuliert. Hindernisse, insbesondere Teile eines menschlichen Körpers, lassen sich so vorteilhafterweise in guter Näherung aufwands- und kostenarm simulieren. Insbesondere ist dabei vorgesehen, dass die Federkonstanten mit Werten zwischen 10 N/mm (N: Newton; mm: Millimeter) und 75 N/mm variiert werden. Die Shorehärten werden vorteilhafterweise zwischen einer Shore Härte A von 10 und einer Shore Härte A von 70 variiert.

Insbesondere wird durch eine Anordnung aus einer Feder mit einer Federkonstante von 75 N/mm und einem Elastomerelement mit einer Shore Härte A von 70 ein menschlicher Finger simuliert. Weiter insbesondere wird durch eine Anordnung aus einer Feder mit einer Federkonstante von 50 N/mm und einem Elastomerelement mit einer Shore Härte A von 30 ein menschliches Knie simuliert. Weiter insbesondere wird durch eine Anordnung aus einer Feder mit einer Federkonstante von 10 N/mm und einem Elastomerelement mit einer Shore Härte A von 10 ein menschlicher Bauch simuliert. Vorteilhafterweise wird der sich bei einer Anordnung aus einer Feder mit einer größten Federkonstante und einem Elastomerelement mit einer größten Shore Härte ergebender Steigungsverlauf als obere Grenze festgelegt. Vorteilhafterweise wird der sich bei einer Anordnung aus einer Feder mit einer kleinsten Federkonstante und einem Elastomerelement mit einer kleinsten Shore Härte ergebender Steigungsverlauf als untere Grenze festgelegt. Das Erkennen von tatsächlich vorliegenden Einklemmsituationen kann so weiter verbessert werden.

Gemäß einer weiteren vorteilhaften Ausgestaltung des Verfahrens zum Erkennen einer Einklemmsituation wird die Auswertung der Steigung in festgelegten Verstellbereichen der Lenksäule ausgeführt. Insbesondere ist vorgesehen, dass die Auswertung der Steigung nur in den Verstellbereichen ausgeführt wird, in denen eine Einklemmsituation auftreten kann. Vorteilhafterweise wird hierzu auf eine Positionserkennung der Lenksäule zurückgegriffen. Vorteilhafterweise können Fehler in Bezug auf das Erkennen einer Einklemmsituation in diesen Bereichen so ausgeschlossen werden. Vorteilhafterweise sind die Bereiche anpassbar, insbesondere in Abhängigkeit einer Position eines Fahrersitzes.

Eine weitere vorteilhafte Ausgestaltung sieht vor, dass die vorgegebenen Grenzen durch eine Parametrierung anpassbar sind, insbesondere an unterschiedliche Systeme anpassbar sind, wobei insbesondere wenigstens ein erster Parameter zur Anpassung der Steigung für die untere Grenze und/oder wenigstens ein zweiter Parameter zur Anpassung der oberen Grenze vorgesehen ist. Vorteilhafterweise ist das Verfahren so verbessert an unterschiedlich ausgebildete Systeme, insbesondere unterschiedlich ausgestaltete Lenksäulen, anpassbar.

Gemäß einer weiteren vorteilhaften Ausgestaltung ist vorgesehen, dass bei der Auswertung der Steigung des Stromsignals wenigstens ein vorgebbarer Parameter berücksichtigt wird. Vorteilhafterweise umfasst der wenigstens eine vorgebbare Parameter dabei wenigstens einen der folgenden Parameter: eine Entprellzeit, insbesondere einen vorgegebenen Zeitraum, der festlegt, wie lange eine Steigung des erfassten Stromsignals wenigstens innerhalb der Intervallgrenzen liegen muss, und/oder der festlegt, wie kurzzeitig eine Steigung des erfassten Stromsignals die Grenzen verlassen darf; oder eine Entprellzeit und ein Ergebnis eines Steigungszählers. Der Steigungszähler, der auch als Gradientenzähler bezeichnet werden kann, weist insbesondere wenigstens eine der folgenden Eigenschaften auf: der Steigungszähler wird auf Null zurückgesetzt, für den Fall, dass die Entprellzeit nicht überschritten wurde (Fall1); der Steigungszähler behält den aktuellen Wert, für den Fall, dass die Entprellzeit nicht überschritten wurde (Fall 2); der Steigungszähler wird dekrementiert, insbesondere bis zu dem Wert Null, für den Fall, dass die Entprellzeit nicht überschritten wurde (Fall 3). Je nachdem, wie lange die Steigung des Stromsignals wieder im Sollbereich ist beziehungsweise war, die Steigung des Stromsignals also innerhalb der vorgegebenen Grenzen liegt, ist insbesondere auch ein Wechsel zwischen dem vorstehend beschriebenen Verhalten des Steigungszählers beziehungsweise den drei vorstehend genannten Fällen vorgesehen. Insbesondere sieht eine Ausgestaltung vor, dass der Wert des Steigungszählers zuerst für eine vorgegebenen Zeitspanne gehalten wird (Fall 2), beispielsweise für 50 ms (ms: Millisekunden), und vorteilhafterweise erst dann wieder auf Null zurückgesetzt wird (Fall 1). Im Rahmen der Auswertung der Steigung ist dabei insbesondere vorgesehen, dass für ein Erkennen einer Einklemmsituation der Zähler einen vorgegebenen Wert erreichen muss.

Durch das Berücksichtigen des wenigstens einen Parameters lässt sich vorteilhafterweise verbessert verhindern, dass tatsächliche Einklemmereignisse fehlerhaft nicht erkannt werden, wenn diese zumindest teilweise außerhalb der Grenzen liegen. Alternativ oder zusätzlich kann das Verfahren auch eine Filterung des Stromsignals vor dessen Auswertung in Bezug auf die Steigung vorsehen, insbesondere ebenfalls mit dem Ziel, mögliche Stromschwankungen, die zu einem Ausreißen aus den vorgegebenen Grenzen führen könnten, unberücksichtigt zu lassen, und damit die Erkennungsquote zu verbessern.

Weiter vorteilhaft wird zusätzlich wenigstens ein weiteres Kriterium beim Verstellen der Lenksäule geprüft, wobei dann auf eine Einklemmsituation erkannt wird, wenn zusätzlich das wenigstens eine weitere Kriterium erfüllt ist. Bei dieser Ausgestaltung muss dann also vorteilhafterweise eine Steigung eines erfassten Stromsignals innerhalb der vorgegebenen Grenzen liegen und zusätzlich das wenigstens eine Kriterium erfüllt sein, damit auf eine Einklemmsituation erkannt wird. Das weitere Kriterium kann dabei insbesondere ein Unterschreiten einer Verstellgeschwindigkeit bei einem Verstellvorgang sein. Weiter insbesondere kann ein Unterschreiten einer Drehzahländerungsgeschwindigkeit in Bezug auf die Drehzahl des Elektromotors das weitere Kriterium sein. Hierdurch können insbesondere weiter verbessert Fehldetektionen von Einklemmsituationen verhindert werden.

Insbesondere ist vorgesehen, dass nach einem Erkennen einer Einklemmsituation der Verstellvorgang der Lenksäule gestoppt und vorteilhafterweise umgekehrt wird. Die Lenksäule wird also vorteilhafterweise im Falle einer erkannten Einklemmsituation entgegen der Verstellrichtung, die zu der Einklemmsituation geführt hat, verstellt, insbesondere mit verringerter Verstellgeschwindigkeit. Vorteilhafterweise können so Verletzungen und/oder Beschädigungen verbessert verhindert werden.

Die zur Lösung der eingangs genannten Aufgabe des Weiteren vorgeschlagene verstellbare Lenksäule für ein Kraftfahrzeug umfasst eine Trageinheit, von welcher eine Stelleinheit verstellbar gehalten ist, und eine Verstelleinrichtung, die zum Verstellen der Stelleinheit gegenüber der Trageinheit ausgebildet ist, wobei die Verstelleinrichtung zum Verstellen der Stelleinheit wenigstens einen Elektromotor umfasst und wobei der Lenksäule eine Steuereinheit zugeordnet ist. Die Lenksäule ist dabei ausgebildet, ein erfindungsgemäß ausgebildetes Verfahren auszuführen. Insbesondere ist dabei die Steuereinheit ausgebildet, den wenigstens einen Elektromotor für ein Verstellen der Lenksäule, insbesondere für ein Verstellen der Stelleinheit gegenüber der Trageinheit, anzusteuern, wobei die Steuereinheit weiter ausgebildet ist, während eines Verstellvorgangs für den wenigstens einen Elektromotor ein Stromsignal zu erfassen und eine Steigung des Stromsignals auszuwerten und bei der Auswertung der Steigung des Stromsignals zu prüfen, ob die Steigung des Stromsignals innerhalb vorgegebener Grenzen liegt. Die Steuereinheit ist dabei insbesondere weiter ausgebildet, dann auf eine Einklemmsituation zu erkennen, wenn die Steigung des Stromsignals innerhalb der vorgegebenen Grenzen liegt.

Weitere vorteilhafte Einzelheiten, Merkmale und Ausgestaltungsdetails der Erfindung werden im Zusammenhang mit den in den Figuren (Fig.: Figur) dargestellten Ausführungsbeispielen näher erläutert. Dabei zeigt:
- Fig. 1: in einer perspektivischen Darstellung eine erste Ansicht eines Ausführungsbeispiels für eine erfindungsgemäß ausgebildete Lenksäule;
- Fig. 2: in einer perspektivischen Darstellung eine zweite Ansicht des Ausführungsbeispiels gemäß Fig. 1;
- Fig. 3: in einer Diagrammdarstellung ein erfasstes Stromsignal über der Zeit mit eingezeichneten Grenzen in einem festgelegten Verstellbereich;
- Fig. 4: in einer vereinfachten Seitenansicht ein Aufbau für ein Ausführungsbeispiel zur Ermittlung der Grenzen; und
- Fig. 5: ein Ablaufdiagramm für ein Ausführungsbeispiel eines erfindungsgemäß ausgebildeten Verfahrens.
In den verschiedenen Figuren sind gleiche Teile in der Regel mit den gleichen Bezugszeichen versehen und werden daher mitunter auch jeweils nur im Zusammenhang mit einer der Figuren erläutert.

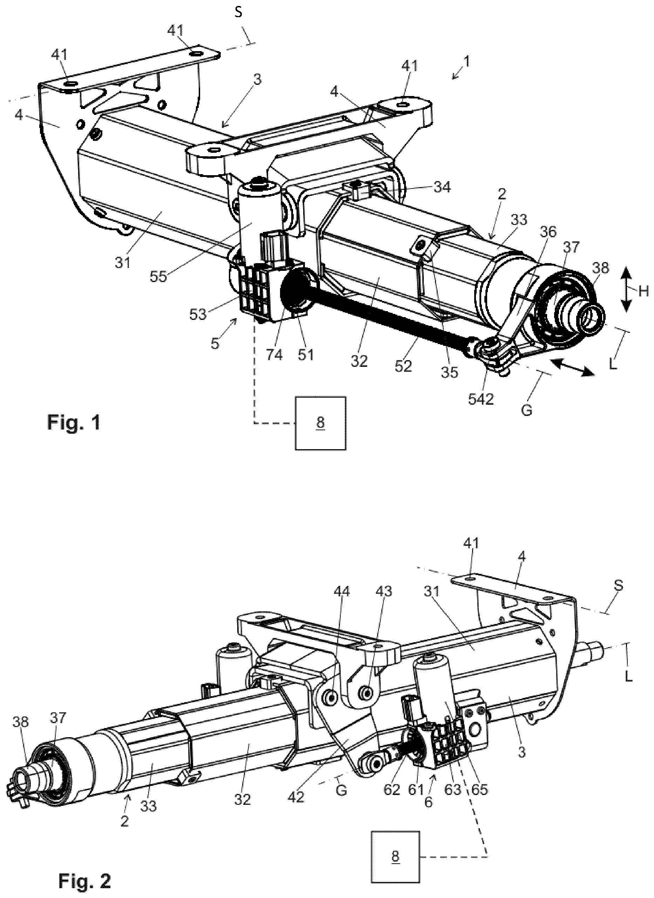

Fig. 1 zeigt ein Ausführungsbeispiel für eine erfindungsgemäß ausgebildete, elektromechanisch verstellbare Lenksäule 1 in einer schematischen perspektivischen Ansicht von oben links schräg auf das hintere Ende, bezogen auf die Fahrtrichtung eines nicht dargestellten Fahrzeugs, wo ein hier nicht dargestelltes Lenkrad im Bedienungsbereich gehalten wird. Fig. 2 zeigt die Lenksäule 1 in einer Ansicht von der gegenüberliegenden Seite, also von oben rechts gesehen.

Die Lenksäule 1 umfasst eine Manteleinheit 3, die ein Außenmantelrohr 31, ein Zwischenmantelrohr 32 und ein Innenmantelrohr 33 aufweist. Die Mantelrohre 31, 32 und 33 sind axial, in Achsrichtung einer Längsachse L, koaxial ineinander teleskopierend verstellbar angeordnet, wie mit dem Doppelpfeil F angedeutet.

An dem Außenmantelrohr 31 ist am hinteren Ende ein Anschlag 34 angebracht, der am offenen Ende nach innen in den Zwischenraum zwischen Außenmantelrohr 31 und Zwischenmantelrohr 32 vorsteht. Beim Herausfahren schlägt das Zwischenmantelrohr 32 axial gegen den Anschlag 34 an, und ist gegen eine Trennung vom Außenmantelrohr 31 gesichert. Am hinteren Ende des Zwischenmantelrohrs 32 ist ein nach innen in den Zwischenraum zwischen Zwischenmantelrohr 32 und Innenmantelrohr 33 vorstehender Anschlag 35 angebracht, der das Innenmantelrohr 33 gegen Herausziehen aus dem Zwischenmantelrohr 32 sichert.

In der Manteleinheit 3 ist um die Längsachse L drehbar eine Lenkspindel 37 gelagert, die an ihrem hinteren Ende einen Anschlussabschnitt 38 zur Anbringung einer in Fig. 1 und Fig. 2 nicht dargestellten Lenkhandhabe aufweist. Die Lenkspindel 37 ist, wie die Manteleinheit 3, ebenfalls in Längsrichtung teleskopierbar ausgebildet. Eine Stelleinheit 2 der Lenksäule 1 umfasst das Innenmantelrohr 33 samt der darin gelagerten Lenkspindel 37. Diese Stelleinheit 2 ist zur Realisierung einer Längsverstellung relativ zur Manteleinheit 3 in dem Außenmantelrohr 31 in Richtung der Längsachse L teleskopartig verschiebbar aufgenommen, um das mit der Lenkspindel 37 verbundene Lenkrad relativ zur Trageinheit 4 in Längsrichtung vor und zurück positionieren zu können, wie mit dem Doppelpfeil F parallel zur Längsachse L angedeutet.

Die Manteleinheit 3 ist in einer zweiteiligen Trageinheit 4 gehalten, welche Befestigungsmittel 41 zur Anbringung an einer nicht dargestellten Fahrzeugkarosserie aufweist.

Die Manteleinheit 3 ist in ihrem vorderen Bereich um eine quer zur Längsachse L liegende, schematisch dargestellte horizontale Schwenkachse S verschwenkbar relativ zur Fahrzeugkarosserie gelagert. Hierzu ist ein nicht dargestelltes Schwenklager in der Trageinheit 4 oder zwischen dieser Trageinheit 4 und der Fahrzeugkarosserie angeordnet. Im hinteren Bereich ist die Manteleinheit 3 über einen Stellhebel 42 mit der Trageinheit 2 verbunden. Durch eine Drehbewegung des Stellhebels 42 mittels einer Verstelleinheit 6 der Verstelleinrichtung 7 der Lenksäule 1, wie in Fig. 2 gezeigt, kann die Manteleinheit 3 zusammen mit der Stelleinheit 2 relativ zur Trageinheit 4 um die im Einbauzustand waagerecht liegende Schwenkachse S verstellt, insbesondere verschwenkt, werden, wodurch insbesondere eine Verstellung einer an dem Befestigungsabschnitt 38 angebrachten Lenkhandhabe in Höhenrichtung vorgenommen werden kann, was mit dem Doppelpfeil H angedeutet ist.

Eine weitere Verstelleinheit 5 der Verstelleinrichtung 7 der Lenksäule 1, wie in Fig. 1 gezeigt, ist insbesondere zur Längsverstellung der Stelleinheit 2 relativ zur Manteleinheit 3 und relativ zur Trageinheit 4 in Richtung der Längsachse L ausgebildet. Die weitere Verstelleinheit 5 weist in diesem Ausführungsbeispiel einen Spindeltrieb mit einer Spindelmutter 51 mit einem sich längs einer Spindelachse G erstreckenden Innengewinde 74 auf, in die eine Gewindespindel 52 eingreift, also mit ihrem Außengewinde in das korrespondierende Innengewinde 74 der Spindelmutter 51 eingeschraubt ist. Die Gewindespindelachse der Gewindespindel 52 ist in diesem Ausführungsbeispiel identisch mit der Spindelachse G und verläuft im Wesentlichen parallel zur Längsachse L.

Die Spindelmutter 51 ist um die Spindelachse G drehbar in einem Lagergehäuse 53 gelagert, welches fest mit dem Außenmantelrohr 31 der Manteleinheit 3 verbunden ist. In Richtung der Spindelachse G ist die Spindelmutter 51 axial über das Lagergehäuse 53 an der Manteleinheit 3 abgestützt. Die Verstelleinrichtung 5 ist in diesem Ausführungsbeispiel entsprechend ein sogenannter Tauchspindelantrieb.

Die Gewindespindel 52 ist an ihrem freien Ende über einen Befestigungsbolzen 542 an einem Arm 36 drehfest und axial fest abgestützt mit dem Innenmantelrohr 33 verbunden, und die Spindelmutter 51 stützt sich über die Antriebseinheit 53 axial, d.h. in der Längsrichtung, an dem Außenmantelrohr 31 ab. Die Längsrichtung entspricht der Richtung der Längsachse L. Durch eine relative Drehung mittels des Elektromotors 55 der Verstelleinheit 5 der Verstelleinrichtung werden die Gewindespindel 52 und die Spindelmutter 51 je nach Drehrichtung zusammen oder auseinander bewegt, wodurch das Innenmantelrohr 33 axial in das Zwischenmantelrohr 32, und dieses in das Außenmantelrohr 31 eingefahren oder ausgefahren wird, wie mit dem Doppelpfeil angedeutet. Dadurch kann ein an dem Anschlussabschnitt 38 anbringbares Lenkrad nach vorn in eine Verstauposition oder in eine Bedienposition gebracht werden. In der Verstauposition sind das Innenmantelrohr 33 und das Zwischenmantelrohr 32 in das Außenmantelrohr 31 eingefahren, d.h. nach vorn versenkt. In der Bedienposition sind die Mantelrohre 31, 32 und 33 teleskopierend auseinander ausgefahren.

In Fig. 2, welche eine perspektivische Ansicht der Lenksäule 1 von der in Fig. 1 hinten liegenden Seite zeigt, ist erkennbar, wie die Verstelleinheit 6 der Verstelleinrichtung 7 zur Verstellung in Höhenrichtung an der Lenksäule 1 angebracht ist. Die Verstelleinheit 6 der Verstelleinrichtung 7 ist im Prinzip gleichwirkend wie die weitere Verstelleinheit 5 der Verstelleinrichtung 7 aufgebaut. Die Verstelleinheit 6 umfasst ebenfalls eine Spindelmutter 61, in deren Innengewinde längs einer Spindelachse G eine Gewindespindel 62 eingreift. Die Gewindespindel 62 ist in einem Lagergehäuse 63, welches an der Manteleinheit 3 befestigt ist, drehbar um die Achse G gelagert und axial, in Richtung der Achse G, an der Manteleinheit 3 abgestützt, und von einem Elektromotor 65 wahlweise in beide Rotationsrichtungen um die Achse G drehend antreibbar.

Die Verstelleinheiten 5, 6 der Verstelleinrichtung 7 der Lenksäule 1 sind in der dargestellten Ausführung sogenannte Tauchspindelantriebe. Alternativ kann insbesondere auch ein Rotationsspindelantrieb ausgebildet sein, bei dem die Spindelmutter 51 bezüglich Rotation an der Lenksäule 1 gehalten ist und die Gewindespindel 52 von dem Motor 55 drehend antreibbar ist.

Die Verstelleinheit 6 greift am Ende des zweiarmigen Stellhebels 42 an, der um ein Schwenklager 43 drehbar an der Trageinheit 4 gelagert ist, und dessen anderer Arm mit dem anderen Ende in einem weiteren Schwenklager 44 mit der Manteleinheit 3 verbunden ist.

Die Lenksäule 1 umfasst weiter eine in Fig. 1 und Fig. 2 nur schematisch dargestellte Steuereinheit 8. Die Steuereinheit 8 ist dabei ausgebildet, in einem Kraftfahrzeug beim Verstellen der Lenksäule 1 mittels wenigstens eines Elektromotors 55, 65, was hier ein Verstellen der Stelleinheit 2 gegenüber der Trageinheit 4 meint, ein Verfahren zum Erkennen einer Einklemmsituation auszuführen. Ein Verstellen der Lenksäule 1 ist dabei insbesondere ein Verstellen zwischen einer Verstauposition und einer Bedienposition, also ein Verstellen von einer Verstauposition in eine Bedienposition oder von einer Bedienposition in eine Verstauposition. Die Steuereinheit 8 ist dabei ausgebildet, während eines Verstellvorgangs für den wenigstens einen Elektromotor 55, 65 ein Stromsignal zu erfassen, eine Steigung des Stromsignals auszuwerten, und bei der Auswertung der Steigung des Stromsignals zu prüfen, ob die Steigung des Stromsignals innerhalb vorgegebener Grenzen liegt, wobei dann auf eine Einklemmsituation erkannt wird, wenn die Steigung des Stromsignals innerhalb der vorgegebenen Grenzen liegt.

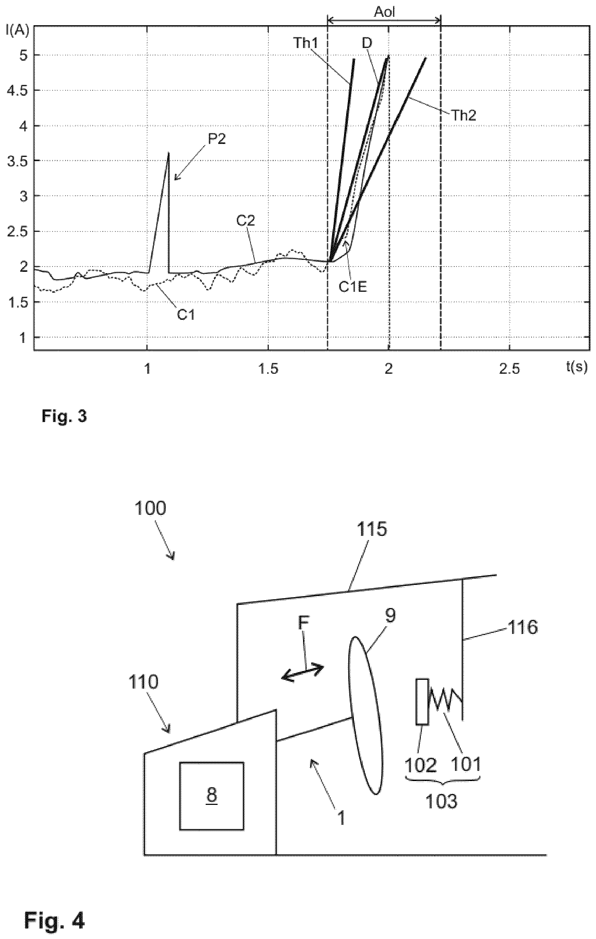

In Fig. 3 sind beispielhaft der sich während eines ersten Verstellvorgangs der Lenksäule 1 ergebende Verlauf eines ersten Stromsignals C1 des Elektromotors 55 und der sich während eines zweiten Verstellvorgangs der Lenksäule 1 ergebende Verlauf eines zweiten Stromsignals C2 des Elektromotors 55 in einer Diagrammdarstellung gezeigt. In dem Diagramm ist auf der Abszisse die Zeit (t) in Sekunden (s) aufgetragen und die Ordinate gibt den auftretenden Strom (I) in Ampere (A) an. Dabei ist für beide Verstellvorgänge vorgesehen, dass eine Einklemmsituation auftritt, was in dem Bereich Aol zu dem starken Anstieg des ersten Stromsignals C1 und des zweiten Stromsignals C2 führt.

Der Bereich Aol entspricht dabei einem vorab festgelegten Verstellbereich der Lenksäule 1, in dem überhaupt eine Einklemmsituation auftreten kann. Innerhalb des Bereichs Aol wird während eines Verstellvorgangs für den Elektromotor 55 das aktuelle Stromsignal C1, C2 erfasst und eine Steigung des jeweiligen Stromsignals C1, C2 bei dem jeweiligen Verstellvorgang ausgewertet. Bei der jeweiligen Auswertung der Steigung des Stromsignals C1, C2 wird geprüft, ob die Steigung des Stromsignals C1, C2 innerhalb vorgegebener Grenzen Th1, Th2 liegt, wobei dann auf eine Einklemmsituation erkannt wird, wenn die Steigung des Stromsignals C1, C2 innerhalb der vorgegebenen Grenzen Th1, Th2 liegt. Die Grenzen Th1, Th2 werden in diesem Ausführungsbeispiel durch einen vorgegebenen ersten Steigungsverlauf, der die obere Grenze Th1 bildet, und einen vorgegebenen zweiten Steigungsverlauf, der die untere Grenze Th2 bildet, vorgegeben. Der erste Steigungsverlauf ist dabei ein Abschnitt einer ersten Steigungsgeraden, die insbesondere in einer Versuchsreihe, wie unter Bezugnahme auf Fig. 4 nachfolgend noch erläutert wird, ermittelt wurde. Der zweite Steigungsverlauf ist ein Abschnitt einer zweiten Steigungsgeraden, die insbesondere ebenfalls in der Versuchsreihe ermittelt wurde. Fig. 3 zeigt einen weiteren Steigungsverlauf D, der insbesondere ebenfalls in der Versuchsreihe ermittelt wurde, und innerhalb der Grenzen Th1, Th2 liegt. Wie in Fig. 3 ersichtlich, ist die Steigung des ersten Steigungsverlaufs, also der oberen Grenze Th1, größer, als die Steigung des zweiten Steigungsverlaufs, also der unteren Grenze Th2.

Liegt nun, wie in Fig. 3 dargestellt, die Steigung eines erfassten Stromsignals C1, C2 innerhalb des Auswertungsbereichs, der durch den vorgegebenen Verstellbereich Aol festgelegt wird, zwischen der unteren Grenze Th2 und der oberen Grenze Th1, so wird auf eine Einklemmsituation erkannt. Bleibt dagegen eine Steigung eines erfassten Stromsignals unterhalb der unteren Grenze Th2 oder übersteigt die obere Grenze Th1, so wird nicht auf eine Einklemmsituation erkannt. Durch vorgegebene Parameter wird dabei festgelegt, wie mit einem kurzzeitigen Unterschreiten und/oder Überschreiten einer der Grenzen Th1, Th2 umgegangen wird. Beispielhaft ist in Fig. 3 dargestellt, dass das Stromsignal C1 die untere Grenze Th2 kurzzeitig unterschreitet C1E. Dieses Unterschreiten hat dabei keinen Einfluss auf das Erkennen der Einklemmsituation.

Weiter zeigt Fig. 3 beispielhaft eine Stromspitze P2 des erfassten Stromsignals C2. Da diese Stromspitze P2 außerhalb des vorab festgelegten Verstellbereichs Aol, in der überhaupt eine Auswertung erfolgt, auftritt, wird das Stromsignal C2 beim Auftreten der Stromspitze P2 nicht ausgewertet und ein fehlerhaftes Erkennen einer Einklemmsituation vermieden, denn diese Stromspitze P2 ist in diesem Ausführungsbeispiel rein auf mechanische Ursachen beim Verstellen der Lenksäule 1 zurückzuführen.

In Fig. 4 ist beispielhaft ein Versuchsaufbau 100 dargestellt, mit dem ein Verfahren zum Einstellen der Grenzen Th1, Th2, wie in Fig. 3 gezeigt, für ein Verfahren zum Erkennen einer Einklemmsituation beim Verstellen einer Lenksäule 1 ausgeführt werden kann. Der Versuchsaufbau umfasst dabei eine verstellbare Lenksäule 1 mit einem Lenkrad 9, wobei die Lenksäule 1 mit deren Trageinheit fest an einer Anordnungsposition 110 angeordnet ist. Ebenfalls an der Anordnungsposition 110 angeordnet ist eine Tragstruktur 115 mit einem Halteelement 116. An dem Halteelement 116 ist ein Federelement 101 und ein Elastomerelement 102 in einer Anordnung 103 zur Simulation eines Hindernisses angeordnet, auf das das Lenkrad 9 beim Verstellen der Lenksäule 1 auftreffen soll. Die Verstellbarkeit der Lenksäule 1 in Längsrichtung ist in Fig. 4 durch einen Doppelpfeil F symbolisch dargestellt. Die Tragstruktur 115 und das Halteelement 116 sind dabei steif ausgebildet, sodass sich deren Eigenschaften beim Auftreffen des Lenkrads 9 auf die Anordnung 103 in vernachlässigbarer Weise auswirken.

In einer Mehrzahl von Verstellvorgängen der Lenksäule 1 trifft die Lenksäule 1 mit dem Lenkrad 9 beim Verstellen jeweils auf die Anordnung 103 als Hindernis auf, wobei ein sich beim Auftreffen auf die Anordnung 103 ergebendes Stromsignal des wenigstens einen Elektromotors der Verstelleinrichtung der Lenksäule 1 erfasst und in Bezug auf dessen Steigung mittels einer der Lenksäule 1 zugeordneten Steuereinheit 8 ausgewertet wird. Die Grenzen für ein Erkennen einer Einklemmsituation werden dabei derart vorgegeben und bei Bedarf angepasst, dass die Steigungen der erfassten Stromsignale innerhalb der Grenzen liegen.

Durch eine Variation des Elastomerelements 102 mit unterschiedlichen Härten und eine Variation der Federelemente 101 mit unterschiedlichen Federkonstanten werden dabei unterschiedliche Hindernisse mittels der Anordnung 103 simuliert. So wird durch eine Anordnung 103 aus einem Federelement 101 mit einer Federkonstante von 75 N/mm und einem Elastomerelement 102 mit einer Shore Härte A von 70 ein eingeklemmter menschlicher Finger als Hindernis simuliert. Durch eine Anordnung 103 aus einem Federelement 101 mit einer Federkonstante von 50 N/mm und einem Elastomerelement 102 mit einer Shore Härte A von 30 wird ein eingeklemmtes menschliches Knie als Hindernis simuliert. Durch eine Anordnung aus einem Federelement 101 mit einer Federkonstante von 10 N/mm und einem Elastomerelement 102 mit einer Shore Härte A von 10 wird ein eingeklemmter menschlicher Bauch als Hindernis simuliert. Durch weitere Kombinationen und weitere Federelemente 101 sowie weitere Elastomerelemente 102 können weitere Simulationen durchgeführt werden.

Ein sich beim Auftreffen auf eine Anordnung 103, die eine kritische Einklemmsituation simuliert, aber im Vergleich zu den weiteren verwendeten Anordnungen 103 am nachgiebigsten ist, einstellendes Stromsignal wird dabei bezüglich dessen Steigung ausgewertet. Ein sich aus den bestimmten Steigungen ergebender Steigungsverlauf wird dabei als untere Grenze Th2 definiert. Durch einen beim Auftreffen auf eine weitere Anordnung 103, die im Vergleich zu den weiteren Anordnungen 103 am härtesten ist, sich in entsprechender Weise ergebender Steigungsverlauf definiert dann die obere Grenze Th1. Durch Versuche mit weiteren verwendeten Anordnungen 103, die bezüglich ihrer Härte zwischen den die Grenzen Th2, Th1 festlegenden Anordnungen 103 liegen, wird dann geprüft, ob die ermittelten Steigungen der Stromsingale innerhalb der unteren Grenze Th2 und der oberen Grenze Th1 liegen. Bei Bedarf werden die Steigungsverläufe, die die untere Grenze Th2 und die obere Grenze Th1 bilden, so nachjustiert, dass sämtliche Steigungen, die beim Auftreffen des Lenkrads 9 auf sämtliche der weiteren Anordnungen 103 ermittelt werden beziehungsweise wurden, innerhalb der unteren Grenze Th2 und der oberen Grenze Th1 liegen.

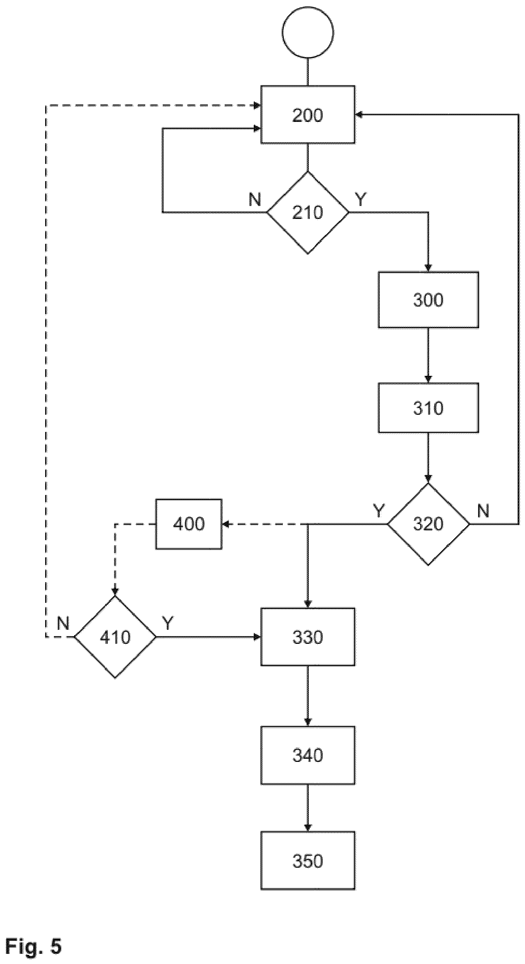

Anhand des in Fig. 5 dargestellten Ablaufdiagramms wird ein weiteres Ausführungsbeispiel für ein erfindungsgemäß ausgebildetes Verfahren zum Erkennen einer Einklemmsituation beschrieben. Dabei startet ein elektromechanischer Verstellvorgang der Lenksäule, wobei in einem Schritt 200 eine Position der Lenksäule beziehungsweise der Stelleinheit der Lenksäule erfasst wird. In einem weiteren Schritt 210 wird dabei geprüft, ob die Position in einem vorgegebenen Verstellbereich liegt (Y), in dem eine Einklemmsituation auftreten kann, oder nicht (N). Liegt die erfasste Position nicht in dem vorgegebenen Verstellbereich (N), so passiert zunächst nichts weiter; es wird aber während des weiteren Verstellens weiterhin die Position erfasst (Schritt 200) und geprüft, ob die Position in dem vorgegebenen Verstellbereich liegt.

Liegt die Position in dem vorgegebenen Verstellbereich (Y), so wird in einem Schritt 300 für den Elektromotor, der für den Verstellvorgang betrieben wird, ein Stromsignal erfasst. In einem weiteren Schritt 310 wird eine Steigung des erfassten Stromsignals ausgewertet, und in einem Schritt 320 geprüft, ob die Steigung des Stromsignals innerhalb vorgegebener Grenzen liegt. Ist das nicht der Fall (N), so wird der Verstellvorgang normal fortgesetzt, und es werden weiterhin die Schritte ausgeführt, um eine Einklemmsituation zu erkennen. Liegt die Steigung des erfassten Stromsignals hingegen innerhalb vorgegebener Grenzen (Y), so wird in dem Schritt 330 auf eine Einklemmsituation erkannt.

In einem weiteren Schritt 340 wird dann der Verstellvorgang gestoppt und in einem Schritt 350 die Stelleinheit entgegen der ursprünglichen Verstellrichtung bewegt, insbesondere um einen vorgegebenen Verstellweg entgegen der ursprünglichen Verstellrichtung bewegt.

In Fig. 5 ist zudem eine Ausgestaltungsvariante, die die weiteren Schritte 400 und 410 umfasst, dargestellt. Diese kann optional vorgesehen sein. Diese Ausgestaltungsvariante sieht vor, dass nach der Prüfung gemäß Schritt 320 erkannt wurde, dass die Steigung des Stromsignals innerhalb vorgegebener Grenzen liegt (Y), und in dem Schritt 400 ein weiterer Parameter erfasst wird. In dem Schritt 410 wird als weiteres Kriterium beim Verstellen der Lenksäule geprüft, ob der erfasste Parameter das Kriterium erfüllt. Erfüllt der Parameter nicht das Kriterium (N), so wird der Verstellvorgang fortgesetzt, und weiter auf das Vorhandensein einer Einklemmsituation geprüft. Erfüllt der Parameter aber das Kriterium (Y), so wird dann in dem Schritt 330 auf eine Einklemmsituation erkannt, und es schließen sich die weiteren Schritte 340, 350 wie bereits beschrieben an.

Die in den Figuren dargestellten und im Zusammenhang mit diesen erläuterten Ausführungsbeispiele dienen der Erläuterung der Erfindung und sind für diese nicht beschränkend.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34, 35: Anschlag
- 36: Arm
- 37: Lenkspindel
- 38: Anschlussabschnitt
- 4: Trageinheit
- 41: Befestigungsmittel
- 42: Stellhebel
- 43, 44: Schwenklager
- 5, 6: Verstelleinheit
- 51, 61: Spindelmutter
- 52, 62: Gewindespindel
- 53, 63: Lagergehäuse
- 542: Befestigungsbolzen
- 55, 65: Elektromotor
- 7: Verstelleinrichtung
- 8: Steuereinheit
- 9: Lenkrad

- 100: Versuchsaufbau
- 101: Federelement
- 102: Elastomerelement
- 103: Anordnung
- 110: Anordnungsposition
- 115: Tragstruktur
- 116: Halteelement

- L: Längsachse
- S: Schwenkachse
- G: Spindelachse (Gewindespindelachse)
- F: Doppelpfeil zur symbolischen Darstellung der Längsverstellbarkeit
- H: Doppelpfeil zur symbolischen Darstellung der Höhenverstellbarkeit

- Aol: für Auswertung festgelegter Verstellbereich
- D: Steigungsverlauf
- C1: Stromsignal
- C1E: Unterschreiten der unteren Grenze (Th2)
- C2: Stromsignal
- P2: Stromspitze
- Th1: obere Grenze
- Th2: untere Grenze

- 200 bis 410: Verfahrensschritte

- N: Prüfbedingung nicht erfüllt
- Y: Prüfbedingung erfüllt

## Patentansprüche

1. Verfahren zum Erkennen einer Einklemmsituation beim elektromechanischen Verstellen einer Lenksäule (1) in einem Kraftfahrzeug mittels wenigstens eines Elektromotors (55, 65), wobei während eines Verstellvorgangs für den wenigstens einen Elektromotor (55, 65) ein Stromsignal (C1) erfasst und eine Steigung des Stromsignals (C1) ausgewertet wird, **dadurch gekennzeichnet, dass** bei der Auswertung der Steigung des Stromsignals (C1) geprüft wird, ob die Steigung des Stromsignals (C1) innerhalb vorgegebener Grenzen (Th1, Th2) liegt, wobei dann auf eine Einklemmsituation erkannt wird, wenn die Steigung des Stromsignals (C1) innerhalb der vorgegebenen Grenzen (Th1, Th2) liegt.

2. Verfahren nach Anspruch 1, **dadurch gekennzeichnet, dass** die Grenzen (Th1, Th2) durch einen ersten Steigungsverlauf, der eine obere Grenze (Th1) bildet, und einen zweiten Steigungsverlauf, der eine untere Grenze (Th2) bildet, vorgegeben werden.

3. Verfahren nach Anspruch 2, **dadurch gekennzeichnet, dass** der erste Steigungsverlauf ein Abschnitt einer ersten Steigungskurve ist, und der zweite Steigungsverlauf ein Abschnitt einer zweiten Steigungskurve ist, wobei die Steigung des ersten Steigungsverlaufs größer ist, als die Steigung des zweiten Steigungsverlaufs.

4. Verfahren nach einem der vorstehenden Ansprüche, **dadurch gekennzeichnet, dass** die Grenzen (Th1, Th2) im Voraus ermittelt werden, wobei in einer Mehrzahl von Verstellvorgängen die Lenksäule (1) beim Verstellen jeweils auf ein Hindernis auftrifft, wobei das Hindernis ein mögliches tatsächliches Hindernis simuliert, und wobei ein sich beim Auftreffen auf das jeweilige Hindernis ergebendes Stromsignal (C1) des wenigstens einen Elektromotors (55, 65) erfasst und in Bezug auf dessen Steigung ausgewertet wird, und die Grenzen (Th1, Th2) derart vorgegeben werden, dass die Steigung der erfassten Stromsignale (C1) innerhalb der Grenzen (Th1, Th2) liegen.

5. Verfahren nach Anspruch 4, **dadurch gekennzeichnet, dass** die Hindernisse jeweils durch eine Anordnung (103) umfassend ein fest angeordnetes Federelement (101) und ein der Lenksäule (1) zugewandtes Elastomerelement (102), wobei unterschiedliche Hindernisse durch unterschiedliche Federkonstanten der Federelemente (101) und/oder unterschiedliche Shorehärten der Elastomerelemente (102) simuliert werden.

6. Verfahren nach Anspruch 5, **dadurch gekennzeichnet, dass** die Federkonstanten zwischen 10 N/mm und 75 N/mm variiert werden und/oder die Shorehärten zwischen einer Shore Härte A von 10 und einer Shore Härte A von 70 variiert werden.

7. Verfahren nach einem der vorstehenden Ansprüche, **dadurch gekennzeichnet, dass** die Auswertung der Steigung des Stromsignals (C1) in festgelegten Verstellbereichen (Aol) der Lenksäule (1) ausgeführt wird.

8. Verfahren nach einem der vorstehenden Ansprüche, **dadurch gekennzeichnet, dass** die vorgegebenen Grenzen (Th1, Th2) durch eine Parametrierung anpassbar sind.

9. Verfahren nach einem der vorstehenden Ansprüche, **dadurch gekennzeichnet, dass** bei der Auswertung der Steigung des Stromsignals (C1) wenigstens ein vorgebbarer Parameter berücksichtigt wird, wobei der wenigstens eine vorgebbare Parameter wenigstens einen der folgenden Parameter umfasst: eine Entprellzeit oder eine Entprellzeit und ein Ergebnis eines Steigungszählers.

10. Verfahren nach einem der vorstehenden Ansprüche, **dadurch gekennzeichnet, dass** zusätzlich wenigstens ein weiteres Kriterium beim Verstellen der Lenksäule (1) geprüft wird (410), wobei dann auf eine Einklemmsituation erkannt wird (330), wenn zusätzlich das wenigstens eine weitere Kriterium erfüllt ist (410 Y).

11. Verfahren nach einem der vorstehenden Ansprüche, **dadurch gekennzeichnet, dass** nach einem Erkennen einer Einklemmsituation (330) der Verstellvorgang gestoppt (340) und umgekehrt (350) wird.

12. Verstellbare Lenksäule (1) für ein Kraftfahrzeug umfassend eine Trageinheit (4), von welcher eine Stelleinheit (2) verstellbar gehalten ist, und eine Verstelleinrichtung (7), die zum Verstellen der Stelleinheit (2) gegenüber der Trageinheit (4) ausgebildet ist, wobei die Verstelleinrichtung (7) zum Verstellen der Stelleinheit (2) wenigstens einen Elektromotor (55, 65) umfasst und der Lenksäule (1) eine Steuereinheit (8) zugeordnet ist, **dadurch gekennzeichnet, dass** die Lenksäule (1) ausgebildet ist, ein Verfahren nach einem der vorstehenden Ansprüche auszuführen.

## Claims

1. Method for detecting a pinch situation during the electromechanical adjustment of a steering column (1) in a motor vehicle by means of at least one electric motor (55, 65), wherein, during an adjustment operation, for the at least one electric motor (55, 65) a current signal (C1) is sensed and a gradient of the current signal (C1) is evaluated,
**characterized in that**, during the evaluation of the gradient of the current signal (C1), a check is made as to whether the gradient of the current signal (C1) lies within predefined limits (Th1, Th2), wherein a pinch situation is detected when the gradient of the current signal (C1) lies within the predefined limits (Th1, Th2).

2. Method according to Claim 1, **characterized in that** the limits (Th1, Th2) are predefined by a first gradient line, which forms an upper limit (Th1), and a second gradient line, which forms a lower limit (Th2).

3. Method according to Claim 2, **characterized in that** the first gradient line is a portion of a first gradient curve, and the second gradient line is a portion of a second gradient curve, wherein the gradient of the first gradient line is greater than the gradient of the second gradient line.

4. Method according to any of the preceding claims, **characterized in that** the limits (Th1, Th2) are determined in advance, wherein, in a plurality of adjustment operations, the steering column (1) in each case strikes an obstacle during adjustment, wherein the obstacle simulates a possible actual obstacle, and wherein a current signal (C1), resulting when the respective obstacle is struck, of the at least one electric motor (55, 65) is sensed and evaluated with regard to its gradient, and the limits (Th1, Th2) are predefined such that the gradients of the sensed current signals (C1) lie within the limits (Th1, Th2).

5. Method according to Claim 4, **characterized in that** the obstacles are simulated respectively by an arrangement (103) comprising a fixedly arranged spring element (101) and an elastomer element (102) facing the steering column (1), wherein different obstacles are simulated by different spring constants of the spring elements (101) and/or different Shore hardnesses of the elastomer elements (102).

6. Method according to Claim 5, **characterized in that** the spring constants are varied between 10 N/mm and 75 N/mm and/or the Shore hardnesses are varied between a Shore A hardness of 10 and a Shore A hardness of 70.

7. Method according to any of the preceding claims, **characterized in that** the evaluation of the gradient of the current signal (C1) is carried out in defined adjustment ranges (AoI) of the steering column (1).

8. Method according to any of the preceding claims, **characterized in that** the predefined limits (Th1, Th2) are adaptable by parameterization.

9. Method according to any of the preceding claims, **characterized in that** during the evaluation of the gradient of the current signal (C1), at least one predefinable parameter is considered, wherein the at least one predefinable parameter comprises at least one of the following parameters: a debouncing time or a debouncing time and a result of a gradient counter.

10. Method according to any of the preceding claims, **characterized in that** at least one further criterion is additionally checked (410) during the adjustment of the steering column (1), wherein a pinch situation is detected (330) when the at least one further criterion has additionally been met (410 Y).

11. Method according to any of the preceding claims, **characterized in that** following the detection of a pinch situation (330), the adjustment operation is stopped (340) and reversed (350).

12. Adjustable steering column (1) for a motor vehicle, comprising a supporting unit (4) by which an actuator (2) is adjustably held, and an adjustment device (7) which is designed to adjust the actuator (2) relative to the supporting unit (4), wherein the adjustment device (7), to adjust the actuator (2), comprises at least one electric motor (55, 65) and a control unit (8) is assigned to the steering column (1), **characterized in that** the steering column (1) is designed to carry out a method according to any of the preceding claims.

## Revendications

1. Procédé de détection d'une situation de coincement lors du réglage électromécanique d'une colonne de direction (1) dans un véhicule automobile à l'aide d'au moins un moteur électrique (55, 65), dans lequel, pendant une opération de réglage, un signal de courant (C1) est détecté pour ledit au moins un moteur électrique (55, 65) et une pente du signal de courant (C1) est analysée, **caractérisé en ce que,** lors de l'analyse de la pente du signal de courant (C1), on vérifie si la pente du signal de courant (C1) se situe dans des limites prédéfinies (Th1, Th2), une situation de coincement étant alors détectée lorsque la pente du signal de courant (C1) se situe dans les limites prédéfinies (Th1, Th2).

2. Procédé selon la revendication 1, **caractérisé en ce que** les limites (Th1, Th2) sont définies par un premier profil de pente, qui forme une limite supérieure (Th1), et un deuxième profil de pente, qui forme une limite inférieure (Th2).

3. Procédé selon la revendication 2, **caractérisé en ce que** le premier profil de pente est un segment d'une première courbe de pente, et le deuxième profil de pente est un segment d'une deuxième courbe de pente, la pente de la première courbe de pente étant supérieure à celle de la deuxième courbe de pente.

4. Procédé selon l'une des revendications précédentes, **caractérisé en ce que** les limites (Th1, Th2) sont déterminées à l'avance, la colonne de direction (1) rencontrant à chaque fois un obstacle lors d'une pluralité d'opérations de réglage, l'obstacle simulant un obstacle réel potentiel, et un signal de courant (C1) dudit au moins un moteur électrique (55, 65), résultant de la rencontre avec l'obstacle respectif est détecté et évalué quant à sa pente, et les limites (Th1, Th2) sont définies de telle sorte que la pente des signaux de courant (C1) détectés se situe à l'intérieur des limites (Th1, Th2).

5. Procédé selon la revendication 4, **caractérisé en ce que** les obstacles sont simulés respectivement par un agencement (103) comprenant un élément à ressort (101) fixé et un élément en élastomère (102) tourné vers la colonne de direction (1), différents obstacles étant simulés par différentes constantes de ressort des éléments à ressort (101) et/ou différentes duretés Shore des éléments en élastomère (102).

6. Procédé selon la revendication 5, **caractérisé en ce que** les constantes de ressort varient entre 10 N/mm et 75 N/mm et/ou les duretés Shore varient entre une dureté Shore A de 10 et une dureté Shore A de 70.

7. Procédé selon l'une des revendications précédentes, **caractérisé en ce que** l'évaluation de la pente du signal de courant (C1) est effectuée dans des plages de réglage définies (AoI) de la colonne de direction (1).

8. Procédé selon l'une des revendications précédentes, **caractérisé en ce que** les limites prédéfinies (Th1, Th2) sont adaptables par paramétrage.

9. Procédé selon l'une des revendications précédentes, **caractérisé en ce que,** lors de l'évaluation de la pente du signal de courant (C1), au moins un paramètre prédéfinissable est pris en compte, ledit au moins un paramètre prédéfinissable comprenant au moins l'un des paramètres suivants : un temps d'anti-rebond ou un temps d'anti-rebond et le résultat d'un compteur de pente.

10. Procédé selon l'une des revendications précédentes, **caractérisé en ce qu'**au moins un autre critère est en outre vérifié (410) lors du réglage de la colonne de direction (1), une situation de coincement étant alors détectée (330) lorsque ledit au moins un autre critère est également rempli (410 Y).

11. Procédé selon l'une des revendications précédentes, **caractérisé en ce qu'**après la détection d'une situation de coincement (330)**,** l'opération de réglage est arrêtée (340) et inversée (350).

12. Colonne de direction réglable (1) pour un véhicule automobile, comprenant une unité de support (4), par laquelle une unité de positionnement (2) est maintenue de manière réglable, et un dispositif de réglage (7) conçu pour régler l'unité de positionnement (2) par rapport à l'unité de support (4), le dispositif de réglage (7) comprenant, pour régler l'unité de positionnement (2), au moins un moteur électrique (55, 65) et une unité de commande (8) étant associée à la colonne de direction (1), **caractérisée en ce que** la colonne de direction (1) est conçue pour exécuter un procédé selon l'une des revendications précédentes.
